# FASCICULE DE BREVET EUROPEEN

(11) **EP 0 475 814 B1**
(45) Date de publication et mention de la délivrance du brevet: **06.03.1996**
(21) Numéro de dépôt: 91402342.9
(22) Date de dépôt: 02.09.1991
(51) Int. Cl.: B65H 59/06, B63B 22/18, H02G 1/10

(54) **Dévidoir immergé pour un câble sous-marin**
Untergetauchte Abwickelvorrichtung für ein Unterwasserkabel
Submerged reel for underwater cable

(30) Priorité: 11.09.1990 FR 9011201
(43) Date de publication de la demande: 18.03.1992
(73) Titulaire: SOCIETE ECA, Société dite, F-92600 Asnières (FR)
(72) Inventeur: Mas, Georges Léon Joseph Marie, F-83990 Saint-Tropez (FR); Kermorgant, Hervé André, F-83130 La Garde (FR)
(74) Mandataire: Barnay, André François

(56) Documents cités:
- FR-A- 1 296 222
- GB-A- 2 097 511
- US-A- 3 336 892

## Description

La présente invention concerne un dévidoir immergé pour un câble sous-marin, notamment pour un câble destiné à relier un véhicule sous-marin à un navire de surface.

Un tel engin ou véhicule est relié au navire de surface par un câble électrique et/ou optique qui permet de transmettre des signaux et des informations entre la surface et le fond. Ce câble est stocké sur une bobine de stockage montée sur l'engin sous-marin, l'ensemble étant immergé.

Le câble de liaison entre la surface et le fond doit se dérouler au fur et à mesure de l'avance de l'engin sur le fond sous-marin sous l'effet de l'effort de traction qui est appliqué au câble du fait du déplacement relatif entre le navire de surface et l'engin sous-marin.

Différentes solutions ont été proposées pour permettre un déroulement progressif et régulier du câble de liaison et notamment pour éviter que le câble ne se déroule de manière intempestive sous l'effet des courants marins.

Une première solution consiste à enrober la surface extérieure du câble, préalablement à son premier enroulement sur la bobine, avec une colle choisie de manière à ce que l'adhérence partielle ainsi obtenue entre les différentes spires jointives du câble enroulées sur la bobine offre une résistance déterminée au déroulement du câble.

Dans une seconde solution, selon le document US-A-3.336.892, il a été proposé d'utiliser un dispositif rotatif permettant le dévidage régulier du câble, à la manière d'un moulinet de canne à pêche. Dans cette solution, c'est l'effort de traction appliqué au câble qui provoque la rotation de la partie tournant du dispositif, mais ce dernier ne comporte aucun moyen permettant de réguler efficacement la traction du câble, et notamment de faire face aux efforts excessifs dûs au courant marin.

En effet, en cas de courant marin important, l'effort appliqué par l'eau sur le câble est suffisant pour provoquer le dévidage du câble sans que l'engin sous-marin avance.

De plus, lorsque la totalité du câble de liaison est ainsi déroulée, l'effort qui se trouve appliqué à l'engin sous-marin est important et en limite ses possibilités de manoeuvre.

Le document FR-A-1.296.222 décrit et représente un dispositif de freinage aérodynamique du déroulement d'un câble à partir d'une bobine.

L'invention vise à proposer l'adaptation d'un système de freinage hydrodynamique comportant des moyens simples d'entraînement des aubes de freinage.

A cet effet, l'invention propose un dévidoir immergé pour un câble sous-marin du type comportant une bobine sur le noyau de laquelle est enroulé le câble à dérouler sous l'effet de l'effort de traction qui lui est appliqué, du type comportant un boitier qui reçoit la bobine, et du type comportant au moins un organe rotatif comprenant un disque d'entraînement coaxial à la bobine, qui est entraîné en rotation par le câble lors du déroulement de ce dernier, caractérisé en ce que le disque d'entraînement est disposé axialement entre la paroi radiale d'extrémité du boîtier et l'extrémité correspondante de la bobine et comporte un trou agencé au voisinage du bord radial extérieur à travers lequel passe le brin du câble, le boîtier comporte un orifice qui est formé sensiblement au centre de la paroi radiale d'extrémité du boîtier et par lequel le brin du câble à dérouler sort du boîtier et l'organe rotatif comprend un frein hydrodynamique du déroulement du câble qui comporte un tambour cylindrique de freinage reçu avec jeu radial dans un alésage central débouchant du noyau de la bobine, dont une extrémité axiale est liée en rotation au disque d'entraînement et dont la surface cylindrique extérieure est munie d'aubes hélicoïdales pour provoquer une circulation axiale forcée de l'eau dans l'espace annulaire cylindrique délimité par le tambour et la paroi d'alésage.

Selon d'autres caractéristiques de l'invention :
- le tambour de freinage et le disque d'entraînement sont réalisés sous la forme d'un élément unique ;
- le tambour est monté tournant dans l'alésage du noyau par deux portions d'extrémité formant paliers qui coopèrent avec deux portions correspondantes de l'alésage, des moyens étant prévus pour immobiliser axialement le tambour par rapport à la bobine ;
- des aubes sont formées sur le disque d'entraînement ;
- le dévidoir comporte des ailettes fixes de réaction qui coopèrent avec les aubes formées sur le disque d'entraînement ;
- les ailettes fixes de réaction sont formées sur la face latérale d'un flasque radial d'extrémité de la bobine.

La description qui va suivre en regard des dessins annexés à titre d'exemples non limitatifs, permettra de bien comprendre comment l'invention peut être mise en pratique.

La figure 1 est une vue en coupe axiale d'un mode de réalisation d'un dévidoir réalisé conformément aux enseignements de l'invention.

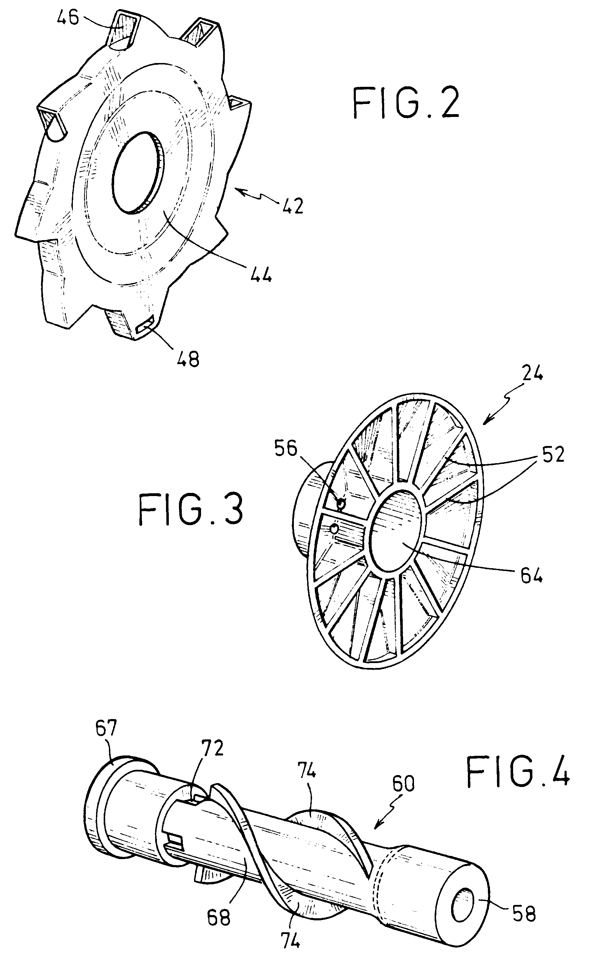

La figure 2 est une vue en perspective du disque d'entraînement en rotation du frein hydrodynamique.

La figure 3 est une vue en perspective du flasque latéral de la bobine comportant les ailettes de réaction.

La figure 4 est une vue en perspective du tambour de freinage hydrodynamique.

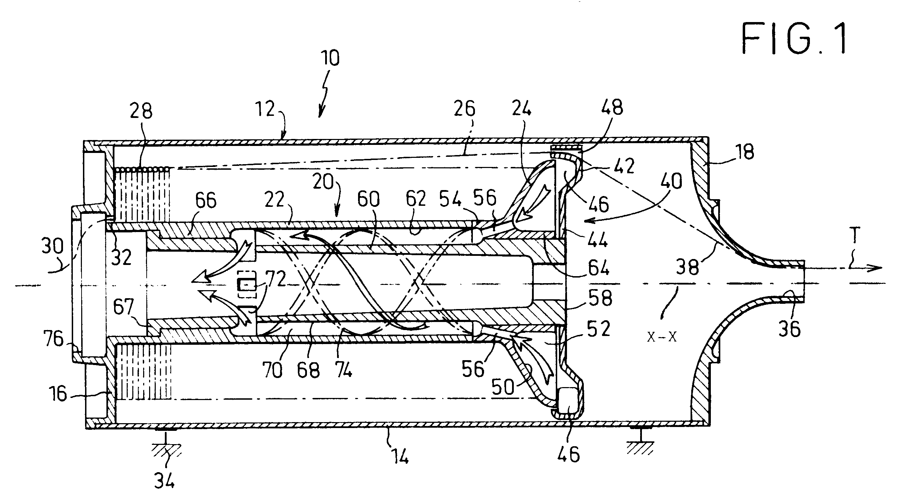

On a représenté à la figure 1 un dévidoir 10 comportant un boitier 12 de forme générale cylindrique d'axe X-X.

Le boîtier 12 est constitué par une virole cylindrique 14 et deux flasques latéraux d'extrémités 16 et 18.

Le dévidoir 10 comporte une bobine fixe 20 dont le noyau est un tube cylindrique creux 22 qui est venu de matière avec le flasque latéral de gauche 16, ce dernier constituant un des deux flasques de la bobine 20.

Le noyau 22 est équipé à son extrémité axiale de droite en considérant la figure 1, d'un second flasque 24.

La bobine 20 est prévue pour recevoir un câble de liaison 26 qui est enroulé sur le noyau 22 en séries de spires jointives 28 comme cela est illustré de manière schématique à la partie gauche de la figure 1.

Un brin fixe d'extrémité 30 du câble 26 sort du flasque latéral 16 par un trou 32 de ce dernier pour être relié au véhicule ou engin sous-marin qui est équipé du dévidoir 10 et dont on a représenté de manière schématique le châssis 34 auquel est fixé le boîtier cylindrique 12.

Le flasque 18 du boîtier 12 comporte en son centre un orifice tubulaire 36 prévu pour permettre la sortie du brin 38 à dérouler du câble 26.

On décrira maintenant les moyens de régulation de la vitesse de dévidage du câble 26 hors du dévidoir 10.

A cet effet, le dévidoir 10 comporte un frein hydrodynamique 40.

Le frein hydrodynamique 40 est un frein rotatif qui est entraîné en rotation directement par le câble 26 sous l'effet de l'effort de traction qui est appliqué à celui-ci et au moyen d'un disque radial d'entraînement en rotation 42.

Le disque 42 comporte un voile central plan 44 qui se prolonge radialement vers l'extérieur par une série d'aubes 46 en forme de godets ou d'écopes qui guident et orientent l'eau qui remplit le dévidoir immergé 10, lors de la rotation du disque 42.

Au voisinage de son bord radial extérieur le disque 42 comporte un trou 48 dans lequel passe le câble 26.

Le disque 42 comportant les aubes 46 est disposé de manière adjacente au flasque latéral 24 de la bobine 20 dont la face en vis-à-vis 50 comporte des ailettes fixes de réaction 52 qui coopèrent avec les aubes 46 pour obtenir l'effet de freinage hydrodynamique par l'effet "d'emprisonnement" de l'eau guidée par les aubes 46 dans l'espace délimité par le disque 42 et le flasque 24.

Dans la zone 54 de raccordement entre le flasque latéral 24 et le noyau tubulaire 22 de la bobine 20, il est prévu une série de passages 56 qui mettent en communication les espaces délimités par les ailettes fixes 52 avec l'espace interne du noyau tubulaire 22.

Le disque d'entraînement 42 est fixé à l'extrémité axiale 58 d'un tambour rotatif de freinage 60.

Le tambour 60 est également réalisé sous la forme d'un élément tubulaire qui se prolonge axialement depuis le disque 42 à l'intérieur de l'alésage interne débouchant 62 du noyau 22.

Le tambour 60 est par exemple un organe réalisé en matière plastique et qui est monté à rotation dans le noyau 22 au moyen de surfaces cylindriques complémentaires des deux organes définissant deux zones de paliers 64 et 66.

Le diamètre de l'alésage interne 62 du noyau 22 et le diamètre de la surface cylindrique externe 68 du tambour 60 sont choisis de manière à délimiter un espace cylindrique annulaire 70 dans lequel peut circuler de l'eau depuis les passages 56 en direction de trous d'évacuation 72 formés dans la paroi tubulaire du tambour 60.

La circulation de l'eau est une circulation axiale forcée qui est obtenue grâce à des aubes hélicoïdales 74 formées sur la surface cylindrique extérieure 68 du tambour 60.

Lorsque le tambour est entraîné en rotation, les aubes hélicoïdales 74 ont pour effet de provoquer une circulation interne de l'eau dans le sens indiqué par les flèches de la figure 1, l'eau étant finalement évacuée par le trou central 76 prévu dans le flasque latéral 16 du boîtier 12.

De préférence, le tambour 60 comporte une collerette radiale 67 à son extrémité qui est en contact avec l'extrémité externe de la zone de palier 64 afin de retenir le tambour axialement contre la réaction engendrée sur les aubes 74 en rotation.

Le dévidoir selon l'invention fonctionne de la manière suivante.

L'ensemble du dévidoir étant monté sur le véhicule sous-marin, il se trouve immergé et rempli d'eau. Lorsque l'engin 34 se déplace, un effort de traction T se trouve appliqué sur le brin 38 du câble 26.

L'effort T a pour effet de provoquer un dévidage du câble 26 de la bobine 20 en provoquant une rotation du disque d'entraînement 42 et du tambour de freinage 60 qui lui est lié en rotation et ceci du fait de l'enroulement hélicoïdal du câble 26 sur la bobine 20 et du décalage radial du trou 48 par rapport à l'orifice central 36.

L'entraînement en rotation du disque 42 et du tambour 60 provoque un effet automatique de freinage hydrodynamique, d'une part du fait de la coopération des aubes 46 avec les ailettes fixes de réaction 52, et d'autre part du fait de la circulation axiale forcée créée par le tambour de freinage 60 dans l'espace cylindrique annulaire 70 à la manière d'une pompe rotative.

Grâce à l'agencement selon l'invention, on obtient un effet de freinage hydrodynamique dont l'effet est d'autant plus grand que la vitesse de rotation du disque d'entraînement 42 est grande.

Le dispositif selon l'invention permet donc d'obtenir un effet de réduction de la vitesse de dévidage du câble en cas de fort courant marin qui se traduit par une augmentation importante de l'effort T.

L'invention n'est pas limitée au mode de réalisation qui vient d'être décrit.

Il est possible de réaliser un dévidoir avec l'une ou l'autre seulement des deux parties du frein hydrodynamique que sont le disque 42 et le flasque 24 d'une part, et le tambour 60 d'autre part.

A titre de variante non représentée, et dans le cas où le dévidoir serait du type à bobine tournante et dans lequel l'orifice de sortie du câble 26 serait remplacé par une fente prévue dans la virole 14 du boîtier 12 et s'étendant parallèlement à l'axe X-X, le frein hydrodynamique serait directement lié en rotation à la bobine tournante pour obtenir un effet de freinage identique à celui qui a été décrit en référence au mode de réalisation représenté sur les figures.

## Revendications

1. Dévidoir immergé (10) pour un câble sous-marin (26) du type comportant une bobine (20) sur le noyau (22) de laquelle est enroulé le câble (26) à dérouler sous l'effet de l'effort de traction (T) qui lui est appliqué, du type comportant un boîtier (12) qui reçoit la bobine (20), et du type comportant au moins un organe rotatif comprenant un disque d'entraînement (42) coaxial à la bobine (20), qui est entraîné en rotation par le câble (26) lors du déroulement de ce dernier, caractérisé en ce que le disque d'entraînement (42) est disposé axialement entre la paroi radiale (18) d'extrémité du boîtier (12) et l'extrémité correspondante (24) de la bobine (20) et comporte un trou (48) agencé au voisinage du bord radial extérieur à travers lequel passe le brin (38) du câble (26), le boîtier (12) comporte un orifice (36) qui est formé sensiblement au centre de la paroi radiale d'extrémité (18) du boîtier et par lequel le brin (38) du câble à dérouler sort du boîtier et l'organe rotatif comprend un frein hydrodynamique (40, 60) du déroulement du câble qui comporte un tambour cylindrique de freinage (60) reçu avec jeu radial dans un alésage central débouchant (62) du noyau (22) de la bobine (20), dont une extrémité axiale (58) est liée en rotation au disque d'entraînement (42) et dont la surface cylindrique extérieure (68) est munie d'aubes hélicoïdales (74) pour provoquer une circulation axiale forcée de l'eau dans l'espace annulaire cylindrique délimité par le tambour (68) et la paroi d'alésage (62).

2. Dévidoir selon la revendication 1, caractérisé en ce que le tambour de freinage (60) et le disque d'entraînement (42) sont réalisés sous la forme d'un élément unique.

3. Dévidoir selon l'une des revendications 1 ou 2, caractérisé en ce que le tambour (60) est monté tournant dans l'alésage (62) du noyau par deux portions d'extrémité formant paliers (64, 66) qui coopèrent avec deux portions correspondantes de l'alésage (62), et en ce qu'il est prévu des moyens (67) d'immobilisation axiale du tambour par rapport à la bobine.

4. Dévidoir selon l'une quelconque des revendications précédentes, caractérisé en ce que des aubes (46) sont formées sur le disque d'entraînement (42).

5. Dévidoir selon la revendication 4, caractérisé en ce qu'il comporte des ailettes fixes de réaction (52) qui coopèrent avec les aubes (46) formées sur le disque d'entraînement (42).

6. Dévidoir selon la revendication 5, caractérisé en ce que les ailettes fixes de réaction (52) sont formées sur la surface latérale d'un flasque radial (24) d'extrémité de la bobine (20).

## Claims

1. A submerged reel assembly (10) for an underwater cable (26) of the type comprising a bobbin (20) on the core (22) of which is wound the cable (26) to be unwound under the action of the pull (T) which is applied thereto, of the type comprising a casing (12) which receives the bobbin (20), and of the type comprising at least one rotatable member comprising a drive disc (42) co-axial with the bobbin (20), which is caused to rotate by the cable (26) during unwinding of the latter, characterised in that the drive disc (42) is arranged axially between the radial end wall (18) of the casing (12) and the corresponding end (24) of the bobbin (20) and has a hole (48) provided in the vicinity of the radial outer edge through which the strand (38) of the cable passes, the casing (12) comprises an opening (36) which is arranged substantially at the centre of the radial end wall (18) of the casing (12) and through which the strand (38) of the cable to be unwound leaves the casing, and the rotatable member comprises a hydrodynamic brake (40, 60) for the unwinding of the cable which comprises a cylindrical braking drum (60) received with radial clearance in a central bore (62) emerging from the core (22) of the bobbin (20), one axial extremity (58) of which is joined to the drive disc (42) so as to rotate with it and of which the outer cylindrical surface (68) is provided with helical blades (74) to cause forced axial circulation of the water in the annular cylindrical space defined by the drum (68) and the wall of the bore (62).

2. A reel assembly according to claim 1, characterised in that the braking drum (60) and the drive disc (42) are formed as a single element.

3. A reel assembly according to either claim 1 or claim 2, characterized in that the drum (60) is mounted to rotate within the bore (62) of the core by two end portions forming bearings (64, 66) which co-operate with two corresponding portions of the bore (62), and in that means (67) are provided for axially fixing the drum with respect to the bobbin.

4. A reel assembly according to any one of the preceding claims, characterised in that the blades (46) are formed on the drive disc (42).

5. A reel assembly according to claim 4, characterised in that it has fixed reaction vanes (52) which co-operate with the blades (46) formed on the drive disc (42).

6. A reel assembly according to claim 5, characterised in that the fixed reaction vanes (52) are formed on the lateral face of a radial end flange (24) of the bobbin (20).

## Patentansprüche

1. Untergetauchte Abwickelvorrichtung (10) für ein Unterwasserkabel (26), mit einer Spule (20), auf dessen Wickelkern (22) das unter dem Einfluß einer darauf einwirkenden Zugkraft (T) abzuwickelnde Kabel (26) aufgerollt ist, mit einem die Spule (20) aufnehmenden Gehäuse (12) und mindestens einem drehbaren Teil mit einer koaxial zur Spule (20) angeordneten Antriebsscheibe (42), die durch das Kabel (26) während des Abwickelvorgangs in eine Drehbewegung versetzt wird, dadurch gekennzeichnet, daß die Antriebsscheibe (42) axial zwischen der äußeren radialen Wandung (18) des Gehäuses (12) und dem zugeordneten Ende (24) der Spule (20) angeordnet ist und ein in der Nähe des radialen äußeren Randes der Antriebsscheibe angeordnetes Loch (48) aufweist, durch welches hindurch sich das Kabelende (38) des Kabels (26) erstreckt, daß das Gehäuse (12) eine Öffnung (36) aufweist, die sich im wesentlichen in der Mitte der äußeren radialen Wandung (18) des Gehäuses befindet und durch die das abzuwickelnde Kabelende (38) aus dem Gehäuse heraustritt, wobei das drehbare Teil aus einer hydrodynamischen Bremsvorrichtung (40, 60) für den Abwickelvorgang des Kabels besteht, die ihrerseits eine zylindrische Bremstrommel (60) aufweist, die mit radialem Spiel in einer zentralen offenen Bohrung (62) des Wickelkerns (22) der Spule (20) angeordnet ist, deren eines axiales Ende (58) mit der Antriebsscheibe (42) verbunden ist und deren äußere Zylinderoberfläche (68) mit spiralförmigen Flügeln (74) versehen ist, um eine axiale Drehung zu verursachen, die durch das Wasser in dem durch die Trommel (68) und die Zylinderwandung (62) begrenzten ringförmigen Zylinderzwischenraum hervorgerufen wird.

2. Abwickelvorrichtung nach Anspruch 1, dadurch gekennzeichnet, daß die Bremstrommel (60) und die Antriebsscheibe (42) einstückig ausgebildet sind.

3. Abwickelvorrichtung nach Anspruch 1 oder 2, dadurch gekennzeichnet, daß die Trommel (60) in der Bohrung (62) des Wickelkerns an zwei ein Lager (64, 66) bildenden Endabschnitten drehbar gelagert ist, die mit zwei korrespondierenden Abschnitten der Bohrung zusammenwirken, und daß Mittel (67) zur axialen Festlegung der Trommel bezüglich der Spule vorgesehen sind.

4. Abwickelvorrichtung nach einem der vorstehenden Ansprüche, dadurch gekennzeichnet, daß die Schaufeln (46) auf der Antriebsscheibe (42) angeordnet sind.

5. Abwickelvorrichtung nach Anspruch 4, dadurch gekennzeichnet, daß sie feststehende Reaktionsflügel (52) aufweist, die mit den auf der Antriebsscheibe (42) angeordneten Schaufeln (46) zusammenwirken.

6. Abwickelvorrichtung nach Anspruch 5, dadurch gekennzeichnet, daß die feststehenden Reaktionsflügel (52) auf der Seitenfläche eines radialen Flansches (24) am äußeren Ende der Spule (20) angeordnet sind.
